# EUROPEAN PATENT SPECIFICATION

(11) **EP 3 083 779 B1**
(45) Date of publication and mention of the grant of the patent: **11.11.2020**
(21) Application number: 14828099.3
(22) Date of filing: 19.12.2014
(51) Int. Cl.: C08J 5/18, B29C 51/00, C08L 27/12, C08L 27/18, C08L 27/20

(54) **ORIENTED FLUOROPOLYMER FILM**
ORIENTIERTER FLUORPOLYMERFILM
FILM FLUOROPOLYMÈRE ORIENTÉ

(30) Priority: 20.12.2013 US 201361918990 P
(43) Date of publication of application: 26.10.2016
(73) Proprietor: The Chemours Company FC, LLC, Wilmington DE 19801 (US)
(72) Inventor: ATEN, Ralph Munson, Chadds Ford, Pennsylvania 19317 (US); BURCH, Heidi Elizabeth, Bear, Delaware 19701 (US); VENKATARAMAN, Sundar Kilnagar, Avondale, Pennsylvania 19311 (US); YOUNG, Robert Thomas, Newark, Delaware 19702 (US)
(74) Representative: Heinemann, Monica
(86) International application number: PCT/US2014/071574
(87) International publication number: WO 2015/095746

(56) References cited:
- EP-A1- 1 208 968
- WO-A1-03/006516
- WO-A1-2011/153681
- US-A- 4 029 868
- US-A- 5 041 500
- US-A1- 2010 314 153

## Description

### FIELD OF THE INVENTION

This invention relates to oriented fluoropolymer film exhibiting improved thermoformability.

### BACKGROUND OF THE INVENTION

US 4 029 868 A discloses terpolymers consisting of tetrafluoroethylene, hexafluoropropylene and either perfluoro(propyl vinyl ether) or perfluoro(ethyl vinyl ether) which are prepared by polymerizing the monomers in the presence of a chlorofluoroalkane or chlorofluorohydroalkane solvent and a chain transfer agent and an initiator in either an aqueous or nonaqueous medium.

WO 03/006516 A1 discloses a fluorothermoplastic composition comprising interpolymerized units derived from about 94 to about 97.5 mole percent (mol%) tetrafluoroethylene (TFE), about 2 to about 3 mol% perfluoro (propyl vinyl ether) (PPVE), and about 0.5 to about 3 mol% hexafluoropropylene (HFP).

US 2010/0314153 A1 discloses a fluorocopolymer comprising a tetrafluoroethylene-derived constituent unit as essential unit, and a hexafluoropropylene-derived constituent unit and/or perfluoro(alkyl vinyl ether)-derived constituent unit.

EP 1 208 968 A1 discloses an ethylene-tetrafluoroethylene copolymer film and tetrafluoroethylene-hexafluoropropylene copolymer film excellent in light transparency.

WO 2011/153681 A1 discloses a transparent film comprising a tetrafluoroethylene-hexafluoropropylene copolymer layer having a organosilane coupling agent treated surface.

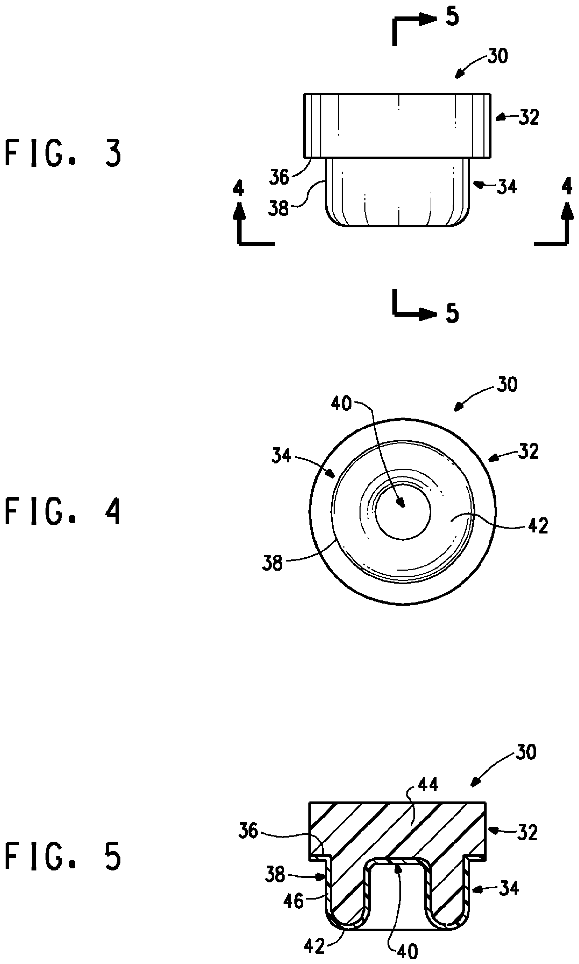

U.S. Patents 5,041,500 and 5,179,167 (Ishiwari and Noguchi), both disclose certain blends of tetrafluoroethylene/hexafluoropropylene copolymer (FEP) with tetrafluoroethylene/fluorovinyl ether copolymer (PFA). In '500, the two copolymers have a melt viscosity (MV) difference of less than 20,000 poises. In '167, the copolymers have an MV difference of at least 20,000 poises. Both patents disclose that the FEP/PFA composition is suitable for molding thick-walled articles in which cracking is suppressed. '500 adds to this disclosure that the composition has good flex resistance. This increased rigidity is expected from the heterogeneous structure of the composition in this patent. In this regard, Fig. 3 of '500 discloses the separate melting temperatures of the FEP and PFA up to a concentration of 83 wt% PFA and 17 wt% FEP. Figs. 3 and 4 of '167 disclose the effect of adding PFA (melting temperature 311°C or 312°C) to FEP (melting temperature of 266°C or 260°C) with respect to the mechanical property of creep under a fixed load at 250°C. In the Examples, each PFA has 3.5 wt% perfluoro(propyl vinyl ether) and each FEP is a dipolymer.

U.S. Patent 8,178,592 (Burch et al.) discloses a foamable composition of three components, FEP, PFA, and foam cell nucleating agent. The foam cell nucleating agent reduces the cell (void) size in the foamed composition. The melting temperature of the PFA is no more than 35°C greater than the melting temperature of the FEP. This enables the foamable composition to be extruded without phase separation and aggregation of copolymer particles at the extrusion die exit. This problem is peculiar to the extrusion foaming of polymer compositions, wherein the annular die opening is small enough to maintain the molten polymer under sufficient pressure to keep the gas blowing agent in solution in the molten polymer so that bubbles do not form in the molten polymer within the extruder or immediately after extrusion (col. 2, I. 63-67 and col. 3, I. 17-23). The high shear resulting from this small die opening is responsible for the phase separation. The shear rate in extrusion foaming is greater than 500 sec⁻¹. Shear rate is the volumetric flow rate of the molten polymer through the die orifice divided by the size (area) of the orifice. Extrusion and injection molding of molten FEP and PFA to form solid (unfoamed) articles is at a shear rate no greater than 200 sec⁻¹, which denotes the combination of relatively large orifice opening together with high volumetric flow rate to provide high productivity of the melt fabrication operation. Indeed, '592 discloses extrusion foaming to reach a line speed of only 300 ft/min (91.4 m/min) as compared to at least 1,000 ft/min (305 m/min) for extrusion of the same thickness of solid polymer insulation (col. 10, I. 23-32).

Independent of the inventions disclosed in the above patents, the problem exists of the thermoforming of oriented FEP film, i.e. the ability to draw (stretch) the film at an elevated temperature less than the melting temperature of the FEP without rupture of the film. This cold drawing of the film results in it becoming thinner, until the strength of the thinner film is exceeded and the film ruptures.

Exemplary of this problem is the disclosure of thermoforming in U.S. Patent 4,554,125, namely, the thermoforming of a sheet of thermoplastic liner material having an elongation of at least 450% over an elastomer core to form a stopper for a sterile fluid container. Polypropylene copolymers are disclosed as the composition of the thermoplastic sheet (col. 3, I. 10-12) in the thickness range of 0.0035 in (0.009 cm) to 0.0075 in (0.02 cm). The thermoforming is carried out at a temperature at which the thermoplastic polymer forming the liner softens, but which is less than the crystalline melting temperature of the thermoplastic polymer (col. 4, I. 43-48). The thermoplastic sheet laminated to the core is thinner than the initial sheet of thermoplastic (col. 4, I. 31-33). The thinning out of the original sheet thickness results from the area of the sheet being thermoformed converting from a planar shape to a three dimensional shape of a greater area. Ruptures of the sheet are avoided by avoiding sharp corners or edges in the mold design, which translate to sharp changes in direction in the topography of the thermoformed shape. "Teflon and nylon" are disclosed as not being useful compositions for the thermoplastic sheet, because they do not have elongations of at least 450% (col. 4, I. 1-6).

Notwithstanding the admonition against using film of Teflon® fluoropolymer in the disclosure of thermoforming in '125, oriented film of Teflon® FEP G7 fluoropolymer having an elongation of only 322% has been found to be thermoformable. FEP G7 is disclosed in U.S. Patent 7,592,406 (Kenny et al.) as having a Melt Flow Rate (MFR) of 7 g/min (col. 3, I. 5-7). It has the composition 7 wt% hexafluoropropylene, and 1.5 wt% perfluoro(propyl vinyl ether), the remainder to total 100 wt% being tetrafluoroethylene. A problem with the G7 FEP is its high melt viscosity, indicated by the low MFR of 7 g/10 min, which limits its extrusion line speed (col. 3, I. 9-13), especially to form thin films. The thermoforming of an oriented film G7 FEP as the liner over an elastomer core to form a stopper offers the advantages over the hydrocarbon polymer liner disclosed in '125 of greater chemical inertness and non-stick (release) property, i.e. the G7 FEP liner does not interact with the sterile fluid in the container to change the composition of the fluid or to contaminate it.

The invention of '406 is the discovery of an FEP having a Melt Flow Rate (MFR) of at least 10g/10 min that can be used as the insulation in an antennae wire in an electronic device wherein the antennae wire passes through the hinge and is therefore subjected to multiple flexing upon opening and closing of the hinge, without cracking of the insulation. This FEP has a composition of 3.5 to 8 wt% hexafluoropropylene and 1.2 to 2 wt% perfluoro(alkyl vinyl ether), the remainder to total 100 wt% being tetrafluoroethylene. In the Example in '406, the FEP contains 7.4 wt% hexafluoropropylene and 1.5 wt% perfluoro(ethyl vinyl ether) and has an MFR of 10.8 g/10 min. The flexibility of this copolymer, enabling it to serve as the insulation of the antennae wire, is indicated by its MIT flex life being at least 15,000 cycles, but not exceeding 25,000 cycles (col. 3, I. 23-25), which is only about one-half of that of the MFR 7 g/10 min copolymer (col. 6, I. 15-17), which is the G7 FEP. Thus, according to '406, a small increase in MFR for the FEP is accompanied by a large decrease in MIT flex life.

The problem is how to provide an oriented FEP film that has better thermoformability than FEP G7 and/or preferably also has better melt flowability as characterized by higher MFR.

### SUMMARY OF THE INVENTION

The present invention solves the above-mentioned problem. One embodiment of the present invention solving the problem is an oriented film comprising the composition 55 to 95 wt% tetrafluoroethylene/- hexafluoropropylene/perfluoro(alkyl vinyl ether) copolymer and 45 to 5 wt% tetrafluoroethylene/perfluoro(alkyl vinyl ether) copolymer to total 100 wt% based on the combined weight thereof, wherein said alkyl in each said copolymer comprises 1 to 4 carbon atoms, and wherein hexafluoropropylene is not present in the tetrafluoroethylene/- perfluoro(alkyl vinyl ether) copolymer. Each mention herein of the combined weight thereof means the combined weight of two copolymers.

Another embodiment of the present invention is the process comprising thermoforming an oriented film comprising 55 to 95 wt% tetrafluoroethylene/hexafluoropropylene/perfluoro(alkyl vinyl ether) copolymer and 5 to 45 wt% tetrafluoroethylene/perfluoro(alkyl vinyl ether) copolymer to total 100 wt% based on the combined weight thereof, wherein said alkyl in each said copolymer comprises 1 to 4 carbon atoms, and wherein hexafluoropropylene is not present in the tetrafluoroethylene/- perfluoro(alkyl vinyl ether) copolymer.

Still another embodiment of the present invention involves the use of the oriented film of the present invention in the thermoforming process described in the preceding paragraph.

In each of these embodiments, the composition of the oriented film of the present invention is obtained (made) by and is the product of melt blending the 55 to 95 wt% tetrafluoroethylene/hexafluoropropylene/- perfluoro(alkyl vinyl ether) copolymer and the 45 to 5 wt% tetrafluoroethylene/perfluoro(alkyl vinyl ether) copolymer to total 100 wt% based on the combined weight thereof. Thus, the composition of the oriented film in each of these embodiments can be restated as oriented film of the e amounts of the copolymers introduced into the composition that is then composition comprising 55 to 95 wt% tetrafluoroethylene/hexafluoropropylene/perfluoro(alkyl vinyl ether) copolymer and 5 to 45 wt% tetrafluoroethylene/perfluoro(alkyl vinyl ether) copolymer to total 100 wt% based on the combined weight thereof, wherein said alkyl in each said copolymer comprises 1 to 4 carbon atoms, and wherein hexafluoropropylene is not present in the tetrafluoroethylene/- perfluoro(alkyl vinyl ether) copolymer.

Each of these embodiments exhibits the surprising result of improved thermoformability arising from the presence of the tetrafluoroethylene/- perfluoro(alkyl vinyl ether) copolymer in the composition of the oriented film and the presence of sufficient perfluoro(alkyl vinyl ether) in each copolymer.

The improvement in thermoformability arises from the improved cold drawability of the oriented film during thermoforming, i.e. the ability of the film to stretch during thermoforming to the topography of the thermoformed shape without rupture of the film. Cold drawing is stretching of the film at an elevated temperature that is a temperature less than the lowest melting temperature of the film composition, but is preferably at a temperature above the Tg of the copolymers in the composition. Most preferably, the thermoforming and thus the cold drawing is carried out at a temperature in the range of 150°C to a temperature that is less than the lowest melting temperature of the composition. These temperatures are the temperatures of the means applying heat to the oriented film during thermoforming. Preferably, the film composition is such that at the thermoforming temperature used, the film does not soften such that it sags (under its own weight) into the thermoforming mold while awaiting the thermoforming to be carried out, i.e. during the thermoforming process. This distinguishes from the thermoforming carried out in U.S. Patent 4,554,125, referred to above, wherein the heating to carry out the thermoforming softens the thermoplastic sheet being thermoformed. That the oriented film of the present invention is non-sagging during the thermoforming process is indicated by its lowest melting copolymer component, tetrafluoroethylene/hexafluoropropylene/perfluoro(alkyl vinyl ether) copolymer having a continuous service temperature of 200-205°C, while the higher melting copolymer, tetrafluoroethylene/perfluoro- (alkyl vinyl ether) copolymer, has a continuous service temperature of 250°C. One requirement for this continuous service temperature rating is that copolymer not lose its shape for the duration of the exposure to heating (six months) at the service temperature, which is much longer than the less than two minute cycle time of thermoforming. Thus, the cold drawing of the oriented film is carried out hot, preferably at least at 150°C, but preferably not so hot that the film sags during the thermoforming process.

The surprisingly improved thermoformability of the oriented film of the present invention can be characterized by its improved draw ratio as compared to oriented film comprising the same tetrafluoroethylene/hexafluoropropylene/perfluoro(alkyl vinyl ether) copolymer by itself. Draw ratio is the length of the film after cold drawing in the thermoforming process divided by the original length of the film. A method for determining draw ratio is described under the section DETAILED DESCRIPTION below. This comparison is carried out at the same original film thickness and thermoforming process. The improved draw ratio of the oriented film of the present invention means that the film can be cold drawn to a deeper draw without film rupture, than the film of the same tetrafluoroethylene/- hexafluoropropylene/perfluoro(alkyl vinyl ether) copolymer under the same conditions of thermoforming and film thickness.

Another way of characterizing the improved thermoformability of the oriented film of the present invention is that the thermoforming can be carried out using a thinner oriented film without rupture, as compared to oriented film of the same tetrafluoroethylene/hexafluoropropylene/- perfluoro(alkyl vinyl ether) copolymer by itself at the same thermoforming conditions. For example, while thermoforming can be carried out using a 3-mil (0.076 mm) thick film comprising the tetrafluoroethylene/hexafluoropropylene/perfluoro (alkyl vinyl ether) copolymer by itself without film rupture, when the original film thickness is reduced to 2 mils (0.05 mm), the film ruptures during the same thermoforming process. Oriented film of the present invention having an original thickness of 2 mils (0.05 mm) can be used in the same thermoforming process without rupturing.

Still another way of characterizing improved thermoformability of the oriented film of the present invention, is when the thermoforming process involves the thermoforming of multiple identical articles, e.g. at least 10 articles. Improved performance of the oriented film of the present invention as compared to oriented film of the tetrafluoroethylene/hexafluoropropylene/perfluoro (alkyl vinyl ether) copolymer by itself, wherein the original film thickness is the same as is the thermoforming process, can be demonstrated by the oriented film of the present invention having fewer rupture defects in the thermoformed articles. A rupture defect means that the thermoformed article cannot be used for its intended purpose. If the film of the copolymer by itself produces two rupture defects, the film of the present invention will produce fewer rupture defects, e.g. one defect and preferably no defects. The party carrying out the thermoforming process may choose to achieve economy by using a film thickness that is borderline in rupture performance, in the sense that the savings in using a thin film is greater than the loss of an article because of a rupture defect.

In each of these comparisons of performance characterizing improved thermoformability, the orientation of the films are the same since the films are made by the same extrusion process.

Preferred aspects of each of these embodiments, wherein these aspects can be used individually or in any combination, are as follows:
The improvement in thermoformability exhibited by the oriented film of the present invention is preferably at least 25%. If the improvement were characterized by improved draw ratio, then the draw ratio of the oriented film of the present invention would be at least 25% greater than that for the oriented film of same thickness of the tetrafluoroethylene/- hexafluoropropylene/perfluoro (alkyl vinyl ether) copolymer by itself thermoformed by the same process. If the improvement were characterized by film thickness reduction, then the oriented film could be thermoformed without rupture at a film thickness that is at least 25% less than the film thickness of oriented film of the tetrafluoroethylene/ hexafluoropropylene/perfluoro (alkyl vinyl ether) copolymer by itself that ruptures when thermoformed by the same process. If the improvement in thermoformability were characterized by improved productivity in the thermoforming simultaneous production of multiple articles, the articles of oriented film of the present invention would have fewer to no rupture defects, preferably at least 25% fewer, as compared to oriented film of the tetrafluoroethylene/hexafluoro- propylene/perfluoro (alkyl vinyl ether) copolymer by itself of the same original film thickness and using the same thermoforming process.

The oriented film exhibits an improved draw ratio as compared to film of the same thickness and orientation and under the same thermoforming conditions.

The oriented film has a thickness of no greater than 6 mils (0.15 mm), more preferably no greater than 3 mils (0.076 mm), and a minimum thickness of 0.5 mil (0.013 mm).

The orientation of the film is anisotropic.

The orientation of the film is characterized by shrinkage at 200°C of at least 0.1%.

The composition of the oriented film has a melt flow rate (MFR) of at least 10 g/10 min.

These preferences apply individually or in any combination to any and all of the compositions disclosed herein for use in making oriented film of the present invention and to the improved thermoforming performance of such film.

Preferred compositions for making oriented film of the present invention include the following: The total weight of perfluoro(alkyl vinyl ether) present in both copolymers of the composition is effective to improve (increase) the thermoformability of said film. The total weight of the perfluoro(alkyl vinyl ether) in the composition comprising the oriented film is at least 2.4 wt% based on the combined weight of the copolymers. The perfluoro(alkyl vinyl ether) of the tetrafluoroethylene/perfluoro(alkyl vinyl ether) copolymer in the composition comprising the oriented film is at least 5 wt% of said copolymer. The perfluoro(alkyl vinyl ether) in the tetrafluoroethylene/hexafluoropropylene/perfluoro(alkyl vinyl ether) copolymer and the tetrafluoroethylene/perfluoro(alkyl vinyl ether) copolymer is the same. More preferably, the perfluoro(alkyl vinyl ether) in each copolymer is perfluoro(ethyl vinyl ether). The tetrafluoroethylene/- hexafluoropropylene/perfluoro(alkyl vinyl ether) copolymer contains 6 to 15 wt% hexafluoropropylene, and 0.5 to 2.2 wt% of perfluoro (alkyl vinyl ether), wherein said alkyl contains from 1 to 4 carbon atoms, the remainder to total 100 wt% being tetrafluoroethylene.

### DESCRIPTION OF THE DRAWINGS

Fig. 1 shows in enlarged cross-section two extruded films heat sealed together at one end of each film;
Fig. 2 shows isometrically a bag made by heat sealing extruded films together on three sides of the bag;
Fig. 3 shows a side view of a container stopper incorporating a liner of film of the present invention;
Fig. 4 shows a bottom view of the stopper from the perspective of line 4-4 of Fig. 3;
Fig. 5 shows a side view cross-section of the stopper of Fig. 5 along the line 5-5 of Fig. 3 revealing the liner of oriented film of the present invention:
Fig. 6 shows in side view cross-section upper and lower molds in the open position and having concavities for forming a stopper approximating that of Fig. 3;
Fig. 7 shows in side view cross-section the upper and lower molds of Fig. 6 in the closed position forming the stopper approximating that of Fig. 3;
Fig. 8 shows in enlargement a portion of the stopper approximating that of Fig. 5; and
Fig. 9 shows a the differential scanning calorimeter curve for a film composition of the present invention, the curve including the endothermic melting hump encompassing the melting temperatures of the composition.

### DETAILED DESCRIPTION OF THE INVENTION

The oriented film of the present invention is solid, i.e. it is not foamed. Accordingly, the composition of the film is preferably free of foam cell nucleant.

The oriented film of the present invention is made by extrusion of the molten composition comprising the film, such as by conventional film extrusion processes, such as extrusion casting and extrusion blowing processes, which produce film that is oriented (molecular orientation) primarily in the direction of extrusion. The shear rate of the extrusion is preferably no greater than 200 sec⁻¹. The extruded film can be further oriented by stretching of the molten film extrudate and/or stretching of the film after cooling and solidification. The stretching after cooling can be in the machine and/or transverse direction by conventional means.

The presence of orientation in the film indicates that the film is made by extrusion of the molten film composition, which causes the polymer molecules in the film to undertake some degree of alignment. The orientation in the film may be uniaxial or biaxial, and in any event is preferably anisotropic in orientation. The effect of the orientation is to give the film greater strength than if the film were made, such as by compression molding, without orientation. The extruded film can be flat in form or can be in the form of a tube, which is then either blown (expanded) and/or slit to form a flat film. In extrusion of a flat film, the stretching lengthens the film, and this is accompanied by narrowing of its width. In extrusion of the film as a tube, blowing of the extruded tube causes the tube to diametrically stretch and expand. The result of extrusion/stretching typically imparts a different orientation in the extrusion direction (machine direction) as compared to the transverse direction, whereby the orientation of the film is anisotropic, and this is the preferred orientation of the film.

The orientation of the film can be measured by determining the shrinkage of the film when heated to a temperature below the lowest melting temperature of the composition of the film. Preferably, the temperature to which the film is heated is 200°C. The existence of orientation in the film means that the film has residual stresses resulting from the alignment of polymer molecules in the extrusion formation, including stretching, of the film. The heating of the film at 200°C enables the film to "relax", i.e. the residual stress in the film is released. This relaxation of the film is manifested by the film shrinking during the heating. Upon cooling of the film to ambient temperature (15-25°C), the shrinkage can be measured. For convenience, the starting dimension of the film (prior to heating) can be 2 in x 2 in (5.08 cm x 5.08 cm). Depending on the extrusion/stretch conditions forming the film, the shrinkage of the film will preferably be at least 0.1%, more preferably at least 0.4%, and most preferably at least 0.6% at least in one direction of the film (calculation: ((original length - length after shrinking)/original length) x 100)). The higher the shrinkage, the greater is the productivity of the production line producing the film, wherein the wind-up rate of the film exceeds the rate of extrusion. The conditions for determining the shrinkage (Shrinkage Test) and thus the film orientation are as follows: The film is suspended in an oven and heated to 200°C for 30 min, followed by removal of the film from the oven and allowing it to air cool to ambient temperature. The original dimension of the film (size mentioned above) is measured to the nearest 0.01 in (0.025 cm) as is the same dimension measured after cooling from the oven heating. These measurements are in the machine direction of the extruded film. The orientation of the film is characterized by its % shrinkage as determined by the Shrinkage Test.

In the preferred anisotropic orientation of the film the shrinkage of the film in the machine direction (direction of film extrusion) is different from the shrinkage of the film in the transverse direction. Anisotropy can result from the stretching of the film while still molten, which is accompanied by a decrease in the width of the film. Subsequent heating of the film to 200°C results in the film sample shrinking differently in the machine and transverse directions.

If the film were formed by compression molding as is the case for making test specimens for tensile property and MIT flex life testing (see ASTM D 2216 and 3307 for the tetrafluoroethylene/hexafluoropropylene/- perfluoro(alkyl vinyl ether) copolymers and tetrafluoroethylene/perfluoro-(alkyl vinyl ether) copolymers, respectively), the resulting film is unoriented, whereby anisotropic orientation is not present. This has the benefit in tensile and MIT flex life testing of these copolymers that the testing does not have to be repeated to obtain results in both the machine and transverse directions.

With respect to the thickness of the oriented film of the present invention, thickness sometimes determines whether the extrusion result is called a film or a sheet. Film may be considered to have a thickness up to 10 mils (0.25 mm). Sheet may be considered to have a thickness greater than 10 mils (0.25 mm). The present invention is primarily directed to film. Thus, molten extrudate that as extruded has a thickness of greater than 10 mils (0.25 mm), but is subsequently stretched, typically in the molten state, to a thickness of less than 10 mils (0.25 mm), will for simplicity both be referred to as film, and the extrusion as extruding a film.

The preferred minimum thickness of oriented film of the present invention is 1 mil (0.025 mm). The preferred maximum thickness of the oriented film is 6 mils (0.15 mm), more preferably 5 mils (0.13 mm), even more preferably 4 mils (0.1 mm) and most preferably 3 mils (0.076 mm). Each of these maximum film thicknesses can be combined with either the 0.5 mil (0.013 mm) or 1 mil (0.025 mm) minimum film thicknesses to form preferred ranges of film thickness for the oriented film of the present invention.

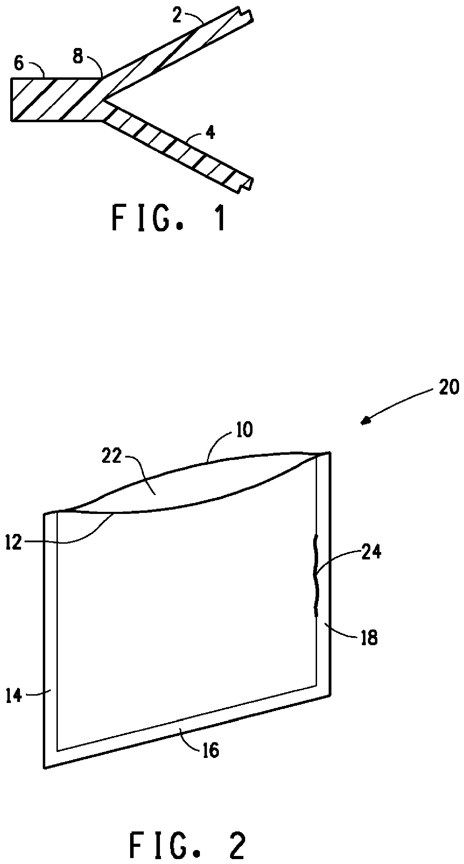

With reference to Fig. 1, oriented films 2 and 4 of the present invention are heat sealed together to form a region 6 that is slightly less than the sum of the thickness of each film. The effect of heating films 2 and 4 sufficiently to create the heat seal and thus region 6, followed by cooling, is that films 2 and 4 become susceptible to rupture at the boundary between the heat seal and the free films 2 and 4 outside the heat seal, e.g. along a boundary line indicated by point 8 in Fig. 1. This boundary is the transition between the thermal history of the formation of the film and its orientation and the heat seal region affecting both of these aspects of the film. The rupture occurs upon flexing of the films 2 and 4 along the boundary line. The boundary serves as a hinge between heat seal region 6 and the free films 2 and 4.

Fig. 2 shows two oriented films 10 and 12 of the present invention heat sealed along regions 14, 16, and 18 to form a bag 20 having an opening 22 at the top. The susceptibility to rupture is shown by crack 24 in film 12 adjacent the heat seal, i.e. running along the boundary line between the heat sealed region 18 and the films 10 and 12 outside the heat seal. The crack 24 occurs upon repeated inflating and deflating the bag, causing the films 10 and 12 to flex away from one another and towards one another, the heat sealed region 18 serving as a solid hinge for this flexing.

The oriented film of the present invention has greater crack resistance and thus hinge durability as compared to oriented film of the same thickness and of the tetrafluoroethylene/hexafluoropropylene/- perfluoro(alkyl vinyl ether) copolymer by itself. In this regard, the presence of the tetrafluoroethylene/perfluoro(alkyl vinyl ether) copolymer in the oriented film of the present invention does not stiffen the film to make in flex resistant, but instead makes the film more flexible and durable.

Figs. 3-8 show an embodiment of advantageous thermoforming use of oriented film of the present invention.

Fig. 3 shows a stopper 30 for insertion into and closure of the opening in (mouth of) a container (not shown). Fig. 4 shows the round shape of the stopper 30. Stopper 30 comprises a top portion 32 and bottom portion 34 of lesser diameter than the top portion. The bottom portion of the stopper fits snugly into the opening of the container, and the top portion 32 has a lower annular surface 36 that is larger than the container opening to engage the top of the container opening so as to prevent the stopper from entirely entering the container opening. The lower portion 34 of the stopper 30 downwardly depends from the lower surface 36 of the upper portion 32 to form the side 38 of the stopper that is for sealing engagement with the container opening. The lower portion 34 of the stopper 30 also comprises a concavity 40 that facilitates insertion of the stopper 30 into the container opening and reduces the thickness of the stopper where piercing by a hypodermic needle would be done. The junction 42 between the concavity 40 and the side 38 of the lower portion 34 is rounded as shown in Figs 3 and 4.

Fig. 5 shows the composite nature of the stopper 30 in that it comprises an elastomer core 44 and a liner 46 of oriented film of the present invention. The elastomer core 44 comprises both the upper and lower portions of the stopper 30, and the liner 46 covers the lower portion 34 and lower surface 36. This covering by film 46 at least over the lower portion 34 provides the contact surface for the fluid present in the container to which the stopper is applied, preventing this fluid from contacting the elastomer core of the stopper. The greater chemical inertness and non-stick property of the film of the present invention, as compared to the elastomer of the elastomer core 44, preserves the purity of the fluid present in the container to which the stopper 30 is applied.

The liner 46 is preferably made by thermoforming of film of the present invention, i.e. heating the film to a temperature for cold drawing as described above and forming the heated film into the shape desired such as the shape of the liner 46. Accordingly, the planar shape of the film is transformed by the cold drawing of the thermoforming process into a three-dimensional shape such as liner 46. This cold drawing of the heated film causes the film to become thinner, especially where the film is drawn over an edge or around a corner such as junction 42. The oriented film of the present invention improves the integrity of the film in cold drawing enabling the film to remain intact, not rupturing during the cold draw occurring during the thermoforming process. The oriented film is further oriented by the cold drawing of the thermoforming process.

When the thermoforming of the film is to make a liner for a stopper such as that of Figs. 3-5, preferably the formation of the stopper includes simultaneous formation of the lining with the molding of the stopper.

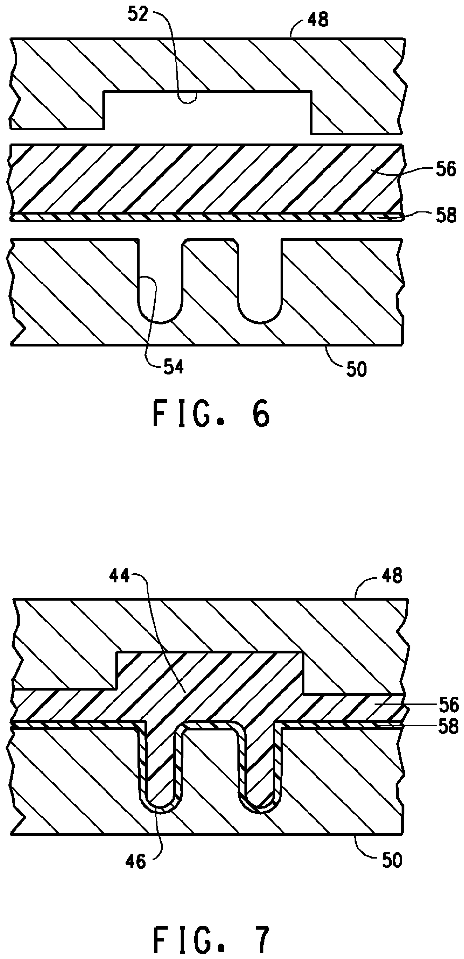

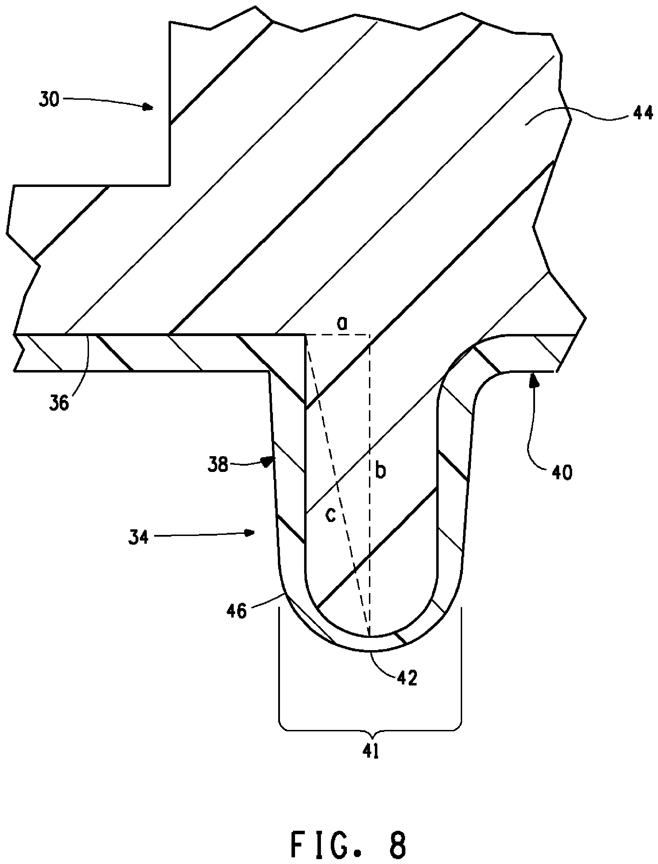

Figs. 6 and 7 show the simultaneous molding of the stopper from a vulcanizable elastomer and thermoforming of the oriented film of the present invention to obtain the lined stopper approximating that of Figs 3-5. Fig. 6 shows opposing upper and lower molds 48 and 50, respectively, in the open position. Upper mold 48 contains a concavity 52 approximating the shape of the upper portion 32 of stopper 30. For simplicity, elements of the stopper formed in Figs. 6 and 7 (and Fig. 8) are identified by the same numbering as the corresponding elements in Figs. 3-5. Thus, the concavity 52 defines the shape of the upper portion 32 of stopper 30. Lower mold 50 contains a concavity 54 approximating the shape of lower portion 34 of stopper 30. Positioned between the open molds 48 and 50 are a sheet 56 of vulcanizable elastomer on top of an oriented film 58 of the present invention.

The vulcanizable elastomer is in fact a pre-elastomer composition, i.e. one that becomes an elastomer when vulcanized. The pre-elastomer is preferably moldable and vulcanizable under the temperature provided by the molds 48 and 50, e.g. heated to temperatures from 150°C to less than the lowest melting temperature of the film composition, preferably up to 200°C.

In Fig. 7, the upper and lower molds 48 and 50 are closed, thereby molding the elastomer sheet 56 and thermoforming the film 58 into the stopper approximating that of Figs. 3-5, wherein the film 58 becomes the liner 46 of (over) the elastomer core 44 of the stopper. The molding temperature is selected to both mold and cure the elastomer sheet and thermoform the film 58. The molding of the sheet 56 of elastomer, involves the forcing of the sheet 56 into the shape of the upper and lower portions of the stopper, corresponding to the respective shape of the molds. This molding of the elastomer forces the film 58 to be cold drawn into the shape of the concavity 54. The mold temperature (upper and lower molds 48 and 50) is considered the temperature of the molding of the elastomer sheet 56 and thermoforming of the film 58, i.e. the molds are the means for applying heat to the sheet 56 and film 58, enabling them to be molded and thermoformed, respectively. The maximum temperature of molding is such that the elastomer of the elastomer sheet does not decompose. At the mold temperature, the film 58 is cold drawable so as to formable into the liner 46 of the lower portion 34 of the stopper 30. Typically, the temperature of molding/thermoforming, while preferably above the Tg of the film composition, more preferably at least 150°C, will be at least 20°C, more preferably at least 30°C, and most preferably at least 40°C, below the lowest melting temperature of the composition of the film 58 and at a temperature that cures (vulcanizes) but does not decompose the underlying elastomer core 44. Preferably, within the temperature range of thermoforming operation, particularly at the temperature of thermoforming, the film 58 does not sag into the lower mold 50, whereby it is the force of the molding of the elastomer into the lower mold that causes the thermoforming of the film into the liner 46 shape. If the elastomer were not present, then some other force could be applied to thermoform the film, such as an upper male mold (plug assist) or application of a vacuum within the lower mold beneath overlying film, or both.

The residence time of the molds in the closed position such as shown in Fig. 7 at the temperature of molding/thermoforming is sufficient to vulcanize the pre-elastomer composition to become an elastomer. The preferred elastomer for forming the elastomer sheet 56 (as a pre-elastomer vulcanizable composition) and for forming the elastomer core 44 of the stopper is butyl rubber.

After the vulcanization is complete, the molded shape is removed from molds 48 and 50 and is trimmed to remove excess sheet 56 and film 58 to obtain the stopper approximating that of Figs. 3-5. The molds 48 and 50 and sheet 56 and film 58 are shown in Figs. 6 and 7 as being indeterminate in width. In practice the molds would contain a plurality of concavities 52 and 54 spaced from one another and the sheet 56 and film 58 would be long (and wide) enough to span each of the opposing pairs of concavities, whereby the molding/thermo- forming shown in Fig. 7 would simultaneously make a plurality of stoppers approximating that of stopper 30.

Preferably, the film liner 46 is adhered to the underlying elastomer core 44. Preferably, this adhesion is obtained by exposing the film 58 to corona discharge on the surface facing the elastomer sheet 56 prior to assembling the stack of sheet 56 and film 58. Without the adherent liner 46, such as by corona discharge, the liner 46 tends to separate from the underlying elastomer core 44 with handling or use. Conditions for corona discharge to make a perfluoropolymer film adherent are well known and can be used in the practice of the present invention. An example of such conditions are those disclosed in patent publication U.S. 2010/0055472.

The composite stopper can have different shapes to accommodate different container openings and stopper applications, with the oriented film of the present invention lining the stopper at least where it could come into contact with the fluid contents of the container to which the stopper is applied.

For simplicity, the liner 46 of film of the present invention is shown in Figs. 5 and 7 to have a uniform thickness. In reality, the liner thins out in the cold drawing occurring during thermoforming. The average decrease in film thickness can be calculated from the increase in surface area accompanying the thermoforming. For example, the surface area of the lower portion 34 of the stopper 30 can be measured and compared to the original area of film 58 now forming the thermoformed liner 46 over the lower portion of the stopper. The % increase in area of the thermoformed liner corresponds to the decrease in average thickness of the thermoformed liner over the lower portion 34. If the area increase were 100%, the average thickness of the thermoformed film would be 50% original film thickness.

Fig. 8 shows schematically the typical thinned-out liner resulting from thermoforming. The liner 46 overlying lower surface 36 of the upper portion 32 of the stopper has the thickness of film 58, i.e. the original film thickness. The liner 46 overlying the side 38 of the lower portion 34 of the stopper becomes increasingly thinner as the distance from the surface 36 increases. The greatest decrease in film (liner) thickness tends to occur in the region 41 encompassing the rounded junction 42 of the concavity 40 and side 38 of the lower portion of the stopper. This region 41 is an edge or corner and thus, a stress concentration in the thermoforming process. The stretching (cold drawing) of the film across this region 41 is where rupture of the liner will most likely occur to render the stopper unfit for use. The thickness of the liner within the concavity 40 may be about the same as the original film thickness as shown in Fig. 8, but the particular shape of the bottom portion 34 of the stopper 30 can cause the thinnest area of the liner 46 to occur in the concavity 40.

The oriented film of the present invention combines good rupture resistance in cold drawing, preferably with melt flowability to permit an economic extrusion rate for manufacture of the film. One characteristic of the good rupture resistance is that the thermoforming of the oriented film of the present invention can be carried out to a greater draw ratio than film of the same thickness and orientation but made of the tetrafluoroethylene/hexafluoropropylene/perfluoro(alkyl vinyl ether) copolymer by itself at the same thermoforming conditions. The draw ratio is the increase in length of the film as compared to its original length in the region of draw. For simplicity in determining draw ratio when the drawn length is curved as in Fig. 8, these lengths can be considered as length "a" representing the original length of the film and length "c" of the right triangle superimposed onto Fig. 8 as being the drawn length to be compared to the original length "a". Length "b" is the greatest distance (depth) of the elastomer core of the lower portion 34 of the stopper 30. Length "a" is the distance from length "b" to side of the elastomer core forming the lower portion 34 of the stopper 30. If the elastomer core were symmetrical, length "a" would be one-half the thickness of the elastomer core. According to the Pythagorean Theorem, c = (a² + b²)^{1/2}. The draw ratio is c/a.

For a given film thickness prior to thermoforming, the draw ratio is preferably at least 2.5:1. The exhibition or possession of a draw ratio by the oriented film means that the oriented film achieves this degree of cold draw with rupture. Another indication of the extent of cold draw carried out in the thermoforming process is the reduction in original film thickness forming the liner, such as liner 46, of the stopper. The oriented film of the present invention is preferably capable of achieving a reduction in original film thickness of at least 50% without rupturing. Whatever indication of improved thermoformability achieved by the oriented film of the present invention, the film can be drawn to a greater draw ratio or a thinner original thickness oriented film can be used as compared to oriented film of the tetrafluoroethylene/hexafluoropropylene/perfluoro (alkyl vinyl ether) copolymer by itself.

The thermoforming cold drawability without rupture of the oriented film of the present invention is with reference to the temperature at which the thermoforming is carried out. When the thermoforming is in connection with the molding of vulcanizable elastomer core 44 of the stopper to form the liner over the core, such as liner 46, the thermoforming temperature may be limited so as to avoid thermal decomposition of the elastomer forming the core. Thus, the thermoforming temperature can be the same as the mold heating temperatures mentioned above.

A multiplicity of stoppers such as stopper 30 can be made simultaneously by using upper and lower molds 48 and 50, respectively having the number of opposing aligned concavities 52 and 54 laterally spaced from one another, and having sheet 56 and film 58 span all these concavities. Thus, for example, fifty stoppers such as stopper 30 can be produced at one time, and these would be separated from one another by trimming away the unmolded sheet and underlying film. The liner 46 of each of these stoppers would be a thermoformed article, whereby the simultaneous molding of fifty stoppers would also constitute the simultaneous thermoforming of fifty liners 46. Fewer of these fifty liners would have rupture defects when the liner is composed of the oriented film of the present invention as compared to the film made from the tetrafluoroethylene/hexafluoropropylene/perfluoro(alkyl vinyl ether) copolymer by itself, same film orientation, thickness and thermoforming process. Thus, for example, five rupture defects (out of 50 liners) may be commercially unacceptable, while one defect may be commercially acceptable. This is the order of improvement in thermoformability performance of the oriented film of the present invention in the thermoforming process that simultaneously mass produces thermoformed articles such as stopper liners. In this example, the improved performance is 500% (calculation: 5/1 x 100). If the performance were zero defects vs one defect using the film of the tetrafluoroethylene/- hexafluoropropylene/perfluoro(alkyl vinyl ether) copolymer by itself, the improved performance could be considered 100% since the copolymer film produces two times the rupture defects as the film of the present invention.

To make the oriented film of the present invention, molding pellets of the tetrafluoroethylene/hexafluoropropylene/perfluoro(alkyl vinyl ether) copolymer and tetrafluoroethylene/perfluoro(alkyl vinyl ether) copolymer can be dry bended together in the desired proportion, and this dry blend can then be fed to an extruder that melt blends the two copolymers together, and extrudes the molten mass as a film by a conventional film extrusion process. Thus, the oriented film of the present invention is made by melt blending the copolymers together, i.e. the composition containing these two copolymers, followed by film extrusion of the product of this melt blending.

With respect to the compositions of the copolymer used to make the oriented film of the present invention, the preferred tetrafluoroethylene/hexafluoropropylene/perfluoro(alkyl vinyl ether) copolymer contains 8-13 wt% hexafluoropropylene (HFP), more preferably 9 to 12 wt%, and 0.5 to 2 wt% of the perfluoro(alkyl vinyl ether)(PAVE), more preferably 1 to 2 wt%, the balance being tetrafluoroethylene (TFE), to total 100 wt% for the copolymer. With respect to the PAVE, the alkyl (perfluoroalkyl) containing 1 to 4 carbon atoms can be linear or branched. Preferred PAVEs include perfluoro(ethyl vinyl ether) (PEVE), and perfluoro(propyl vinyl ether) (PPVE). These preferred TFE/HFP/PAVE copolymers are commonly known as FEP. As defined in ATM D 2116-07, to be considered as FEP, the maximum amount of fluoromonomer other than TFE and HFP is 2 wt%.

The preferred tetrafluoroethylene/perfluoro(alkyl vinyl ether) copolymer has at least 5 wt% PAVE, more preferably at least 6 wt%, and the maximum amount of PAVE in the copolymer is 15 wt%, the remainder to total 100 wt% being TFE. With respect to the PAVE, the alkyl (perfluoroalkyl) containing 1 to 4 carbon atoms can be linear or branched. Preferred PAVEs include perfluoro(methyl vinyl ether) (PMVE), perfluoro(ethyl vinyl ether) (PEVE), and perfluoro(propyl vinyl ether) (PPVE). The most preferred PAVEs are perfluoro(ethyl vinyl ether) (PEVE) and perfluoro(propyl vinyl ether) (PPVE). These copolymers are commonly called PFA. Copolymer wherein the PAVE comprises more than one monomer, such as the combination of PMVE and PPVE is also called PFA, although earlier called MFA by the manufacturer. For this copolymer, the composition is preferably 0.5-13 wt% PMVE and about 0.5 to 3 wt% PPVE, combined to provide at least 5 wt% PAVE, the remainder to total 100 wt% being TFE.

While the foregoing description of the TFE/HFP/PAVE and TFE/PAVE copolymers is in terms of monomers used to make these copolymers, it is understood that these monomers form repeat units forming the copolymer chain, as follows: -CF₂-CF₂- (TFE), CF(CF₃)-CF₂- (HFP), and CF(OR)-CF₂- (PAVE), wherein R is the C₁ to C₄ perfluoroalkyl. The copolymer composition can be determined by determining the amount of each monomer consumed, but is preferably determined from the copolymer by known analytical methods. For example, the HFP or PAVE comonomer composition of the copolymers is determined by infrared analysis on compression molded film made from the copolymer in accordance with the procedures disclosed in U.S. Patent 4,380,618 for the particular fluoromonomers (HFP and PPVE) disclosed therein. The analysis procedures for other fluoromonomers are disclosed in the literature on polymers containing such other fluoromonomers. For example, the infrared analysis for PEVE is disclosed in U.S. Patent 5,677,404. HFP content in wt% is 3.2 X the HFPI, wherein HFPI (HFP index) is the ratio of IR absorbance at wavelengths of 10.18 micrometers and 4.25 micrometers. The TFE/HFP/PAVE copolymers and TFE/PAVE copolymers used in the present invention can be said to consist essentially of, and preferably to consist of, the monomers disclosed herein as being present, as represented by the repeat units mentioned above, in each copolymer. Since HFP is not disclosed as being present in the TFE/PAVE copolymer, and then HFP is not present in the TFE/PAVE copolymers. Thus, HFP is neither a consisting essentially of or consisting of monomer of the TFE/PAVE copolymers.

The presence of PAVE in both copolymers, together with the minimum of 5 wt% being present in the TFE/PAVE copolymer, is important for achieving the improved thermoformability of the oriented film of the preset invention. Preferably the PAVE in both copolymers (TFE/HFP/PAVE copolymer and TFE/PAVE copolymer) is the same and most preferably is PEVE. If PAVE is not present in sufficient amount in the TFE/HFP/PAVE copolymer or the amount of PAVE in the TFE/PAVE copolymer is less than 5 wt%, the thermoforming performance of the resultant oriented film suffers.

The tetrafluoroethylene/hexafluoropropylene/perfluoro(alkyl vinyl ether) copolymers and tetrafluoroethylene/perfluoro(alkyl vinyl ether) copolymers described above can be melt blended together to form the melt blend composition from which the oriented film of the present invention is made. Each of these copolymers are melt-fabricable and fluoroplastics, not fluoroelastomers. By melt-fabricable is meant that each of these copolymers have melt flow properties and mechanical strength, such that individually each can be fabricated by such a common melt fabrication method as extrusion to form articles having good mechanical properties, manifested for example by an MIT flex life of at least 2,000 cycles, as determined by the procedure disclosed in ASTM D 2176 on 8 mil (0.21 mm) thick compression molded film. The composition of the two copolymers is also melt fabricable as indicated by its being melt extrudable into the oriented film of the present invention. The oriented film of the present invention preferably exhibits an MIT flex life of at least 30,000 cycles, preferably at least 40,000 cycles, and most preferably at least 50,000 cycles determined by the above procedure.

The melt fabricability of each of the copolymers and melt blend composition of the two copolymers also indicates that these polymers are also melt flowable. This melt flowability can be described as melt flow rate (MFR) as measured using the Plastometer® according to ASTM D-1238 at the temperature which is standard for the resin (ASTM D 2116 for the tetrafluoroethylene/hexafluoropropylene/perfluoro(alkyl vinyl ether) copolymer and ASTM D 3307 for the tetrafluoroethylene/perfluoro(alkyl vinyl ether) copolymer, both specifying 372°C as the resin melt temperature in the Plastometer® and 5 kg as the weight placed on the molten copolymer to force it through the Plastometer orifice. The MFRs disclosed herein are determined in accordance with ASTM D 1238 under these conditions. These conditions are also used to determine MFR for the melt blend from which the oriented film is formed and thus for the film itself. The amount of polymer extruded from the Plastometer® orifice in a measured amount of time is reported in units of g/10 min. Preferably the MFR of the copolymers, the blend composition and the film will be from 1 to 50 g/10 min.

The TFE/HFP/PAVE copolymer and TFE/PAVE copolymer components of the blend composition from which the oriented film is made have preferred MFRs and a preferred MFR relationship. Preferably, TFE/HFP/PAVE copolymer by itself has an MFR of at least 10 g/10 min and in the range 10 to 50 g/10 min, and the TFE/PAVE copolymer by itself has an MFR of less than 10 g/10 and in the range 0.5 to 9 g/10 min. Preferably, the TFE/HFP/PAVE copolymer by itself has an MFR of 15 to 30 g/10 min and the TFE/PAVE copolymer by itself has an MFR of 0.5 to 8 g/10 min. Preferably, the difference between the MFRs of the TFE/HFP/PAVE copolymer and the TFE/PAVE copolymer by themselves is such that a difference in melt viscosity (MV) of at least 25,000 poises (2500 Pa·s) exists between the MV of each copolymer by itself. Consistent with the MFR preferences for these copolymers, the TFE/HFP/PAVE copolymer has the lower MV (higher MFR) and the PTFE/PAVE copolymer has the higher MV (lower MFR) to constitute this MV difference.

Preferably, the PAVE content of the melt blend composition and thus the oriented film is at least 2.5 w% PAVE, preferably at least 2.8 w% PAVE, arising from the total amount of PAVE contributed to the composition by the two copolymers, these amounts of PAVE being based on the combined weight of the two copolymers introduced into the melt blend composition. Since the melt blend also preferably contains 4 to 12 wt% HFP contributed by the TFE/HFP/PAVE copolymer introduced into the melt blend, the remainder being TFE and the PAVE to total 100 wt%, the composition of the melt blend and oriented film is neither that of an FEP copolymer or a PFA copolymer. Preferably, the maximum amount of PAVE present in the melt blend composition and oriented film is no greater than 10 wt%, more preferably no greater than 8 wt%.

With respect to blend compositions extruded to form the oriented film, it is preferred that the amount of TFE/PAVE copolymer is 5 to 45 wt% of the combined weight of the TFE/PAVE copolymer and TFE/HFP/PAVE copolymer used to make the composition. In another preferred embodiment, the amount of TFE/PAVE copolymer is 20 to 45 wt% of said total weight, and in another embodiment, 25 to 45 wt% of said total weight. Thus the amount of TFE/HFP/PAVE copolymer incorporated into this composition is 95 to 55 wt%, 80 to 55 wt% and 75 to 55 wt%, respectively, to total 100 wt% based on the combined weight of the TFE/HFP/PAVE copolymer and TFE/PAVE copolymer. These are the amounts of the copolymers introduced into the composition that is then melt blended, i.e. introduced into the melt blending. Preferably, the blend composition used to make the oriented film has an MFR of at least 7 g/10 min, more preferably at least 10 g/10 min, and most preferably at least 12 g/10 min. The preferred MFR of the oriented film can be characterized by these same values. Any and all of the compositions of the TFE/HFP/PAVE copolymers and TFE/PAVE copolymers and their MFRs described above for use in making the oriented film of the present invention can be used in the blend compositions to make the oriented films in the thicknesses described above. Especially the copolymer compositions and proportions are preferably selected to obtain the improvement in one or more of the thermoforming improved performances described above.

To make the oriented film from a blend of the TFE/HFP/PAVE copolymer and TFE/PAVE copolymer, molding pellets of these copolymers can be dry bended together in the desired proportion, and this dry blend is then fed to an extruder that melt blends the two copolymers together, providing a molten mass that is then extruded. The composition of the oriented film is the product of this melt blending. Thus, the compositions (proportions of copolymers) disclosed above are the compositions introduced into the melt blending, whereby the composition of the oriented film is the product of melt blending these compositions. The composition of the oriented film is comprised of the TFE/HFP/PAVE copolymer and the TFE/PAVE copolymer. Since the TFE/HFP/PAVE copolymer is present in the major amount in the composition that is melt blended, then the TFE/PAVE copolymer is present in the product of melt blending and in the oriented film as a dispersion of the TFE/PAVE copolymer in a matrix of TFE/HFP/PAVE copolymer.

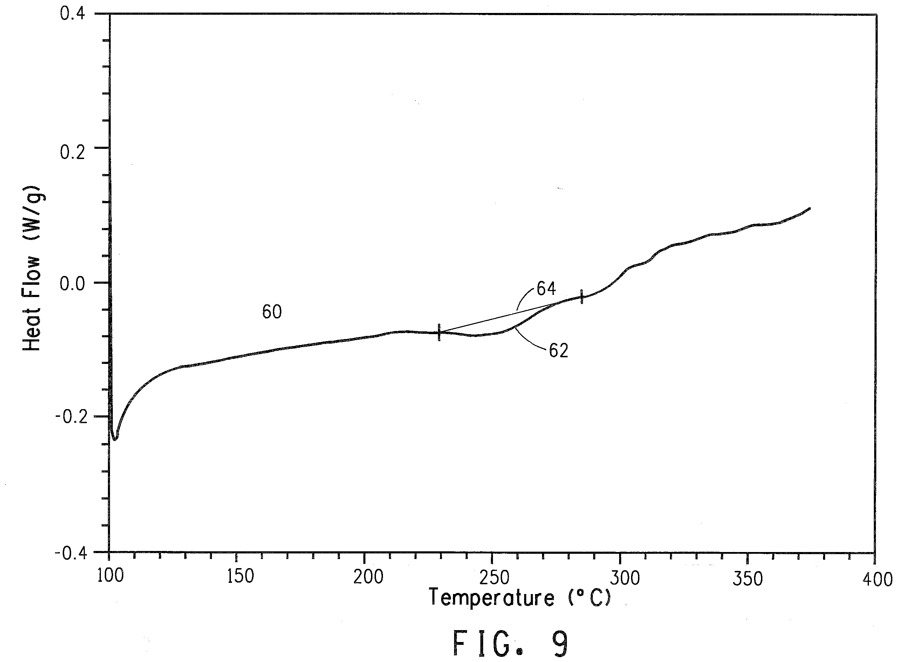

The presence of the copolymers in the melt blend is indicated from the DSC (differential scanning calorimeter) scan as shown in Fig. 9 obtained in accordance with ASTM D 3418 as modified for fluoropolymers by ASTM D 4591. In Fig. 9, the DSC scan is represented by the curve 60 traced by the calorimeter as the polymer composition is heated up at the rate of 10°C/min through the range of 100°C to 380°C, representing the second heating in the melting temperature determination. The polymer composition (film composition 2 in the Examples) exhibits a single melting endotherm 62 rather than two melting endotherms corresponding to the separate melting of the FEP and PFA components as in Fig. 2 of U.S. Patent 5,041,500. This single melting endotherm 62, however, is very broad as indicated by the baseline 64 of the endotherm spanning a temperature range of about 60°C . In addition, there is no sharp peak within the melting endotherm 62 to indicate a single melting temperature for the blend composition as would be the case if the two copolymers were co-crystallized. The breadth of the endotherm 62 and its rounded humplike shape indicates that the PFA and FEP components are not co-crystallized. Instead, the endotherm 62 consists of side-by side melting endotherms (melting temperatures) of the PFA and FEP components overlapping sufficiently to form a single humplike endotherm. For the curve 60, the DSC calorimeter may nevertheless record a melting temperature, which might suggest that some co-crystallization is also present along with separate crystals (domains) of FEP and PFA. The oriented film of the present invention characterized by the humplike endotherm 62 rather than a distinct peak endotherm is believed to comprise the two copolymers.

The DSC determination of melting temperature involves a different thermal history than melt blending and extrusion, i.e. the DSC determination involves a different thermal history than melt extrusion. Just the quenching of the extruded oriented film provides less of an opportunity for co-crystallization than in the DSC melting temperature determination, thereby increasing the likelihood of the copolymers retaining their separate identity in the oriented film. For simplicity, the oriented film of the present invention and the melt blend from which it is obtained is described herein in terms of the amounts of the two copolymers combined to create the melt blend. Accordingly, the composition of the film is the composition formed by combining the two copolymers together.

While the oriented film of the present invention therefore comprises TFE/PAVE copolymer dispersed in TFE/HFP/PAVE copolymer, the film has a defect free appearance, notwithstanding the thinness of the film. Important in achieving oriented film having a defect-free appearance is the presence of PAVE in both copolymers. The TFE/PAVE copolymer will preferably have a greater content of PAVE than the TFE/HFP/PAVE copolymer as indicated by the copolymer compositions described above. The exact amount of PAVE required for the TFE/PAVE copolymer will depend on the proportion of the two copolymers making up the blend composition from which the oriented film is made. This is important not only for achieving defect-free appearance oriented film but also to achieve such film that exhibits improved thermoforming performance. As the amount of PAVE present in the TFE/HFP/PAVE copolymer decreases from 2.2 wt%, and the proportion of TFE/PAVE copolymer present in the blend composition diminishes from 45 wt%, then the amount of PAVE in the TFE/PAVE copolymer component of the blend composition must be increased from the minimum of 5 wt%. Also contributing to both defect-free appearance oriented film and such film that exhibits improved thermoforming performance is the preference for the PAVE being the same (having the same identity) in each copolymer, especially in oriented films as thin as 1 to 3 mils (0.025 to 0.076 mm) thick and 1 to 2 mils (0.025 to 0.051mm) thick.

The oriented film of the thicknesses and having the orientations described above is made by melt extrusion of the blend compositions of any of the TFE/HFP/PAVE and TFE/PAVE copolymers described above combined to obtain the MFR and thermoforming performance improvement described above. In this regard, the oriented film of the present invention can be considered to be the product of such melt extrusion. Melt extrusion enables the oriented film to be made in wide widths, such as at least 24 in (61 cm), preferably at least 36 in (91 cm), more preferably at least 48 in (122 cm) and very long lengths, such as at least 50 ft (15.24 m), while maintaining thickness uniformity, e.g. having a gauge (thickness) variation of no greater than 15%, preferably no greater than 10%. This is especially important for the thin films, 0.5 to 6 mils thickness, of the present invention, which when subjected to thermoforming become even thinner in drawn regions. The great expanse of the oriented film of the present invention made by melt extrusion enables the film to be used for simultaneous thermoforming of many articles, side-by-side, such as to form the liners of stoppers as described herein, using the entire width of the extruded oriented film or a portion thereof that is provided by slitting of the film to the desired width. Other methods of forming film, such as compression molding to produce unoriented film, are incapable of providing film of great expanse such as mentioned above and incapable of making thin films, such as the film thicknesses of the oriented films of the present invention, especially such thin films exhibiting the small gauge variations mentioned above.

Thus, the oreinted film of the present invention can be characterized by the dimensions and gauge uniformities mentioned above and/or by its formation by melt extrusion.

The preferred thermoforming process of the present invention includes the step of forming the oriented film by melt extrusion and then carrying out the thermoforming process using the resultant melt extruded. The preferred process may also be described the thermoforming of oriented film made by melt extrusion and/or by the film dimensions and gauge uniformities mentioned above, preferably made by melt extrusion.

### EXAMPLES

The compositions used in the following Examples are dry/extrusion blends of FEP and PFA having the following compositions unless otherwise indicated (all %s being based on total weight of the copolymer):
PFA: copolymer of TFE and 7.5 wt% PEVE having an MFR of 7 g/10 min, melt temperature of 290°C, and elongation of 290%.
FEP 1: copolymer of TFE, 10 wt% HFP and 1.2 wt% PEVE having about 20 unstable end groups, primarily -COOH, per 10⁶ carbon atoms, an MFR of 20 g/10 min, a melt temperature of 255°C, and an elongation of 361%.
FEP 2: copolymer of TFE, 10 wt% HFP and 1.2 wt% PEVE having about 25 unstable end groups, primarily -COOH, per 10⁶ carbon atoms, an MFR of 30 g/10 min, a melt temperature of 257°C, and an elongation of 345%.

The dry blends of FEP and PFA are extruded into oriented films at a shear rate of 15 sec⁻¹ at a melt temperature of 350°C and draw down ratio characterized by the velocity of the film line speed being much greater than the velocity of the extrusion. For the production of 2 mil (0.051 mm) thick film, the velocity of the line speed is about 30 times the velocity of the molten perfluoropolymer blend leaving the extrusion die (extrusion velocity), and for the production of 1 mil (0.025 mm) thick film, the velocity of the line speed is about 60 times the extrusion velocity. The extruded films used in the Examples all exhibit a gauge variation of no greater than 10%.

Elongations disclosed herein are determined in accordance with ASTM D 638 at 23°C±2°C on compression molded test specimens.

Melting temperatures disclosed herein are determined by DSC as the endotherm being the melting temperature in accordance with ASTM D 3418 and ASTM D 4591 described above. The melt temperatures of the copolymers by themselves are also second heat melting temperatures.

The film compositions are as follows:
Film composition 1: 70 wt% FEP 1 and 30 wt% PFA, having an overall composition of 6.0 wt% HFP and 2.9 wt% PEVE, the remainder to total 100% being TFE, and having an MFR of 13.6 g/10 min. The film composition has an elongation of 335%. The film of composition 1 is anisotropically oriented as indicated by shrinkages of 0.8 and 1.4% in the machine and transverse directions, respectively, as determined by the Shrinkage Test.
Film composition 2: 60wt% FEP 2 and 40 wt% PFA, having an overall composition of 4.8 wt% HFP and 3.2 wt% PEVE, the remainder to total 100% being TFE, and having an MFR of 15.5 g/10 min. The film composition has an elongation of 345%. This film is anisotropically oriented, exhibiting the same shrinkages as obtained for the film composition 1.

### Example 1 - Improved Hinge Durability

Two oriented 5.5 mil (0.14 mm) thick films are heat sealed to form a container such as shown in Figs. 1 and 2. The films are each composition 1. The heat sealing is done by using a hot bar heated to 260°C pressing overlapping film portions together against a platen for several seconds. The presence of the heat seal is observed by the interface between the overlapping film portions no longer being visible. The width of the heat seal is 1/8 in (3.2 mm). The heat seal is allowed to air cool and then is repeated to form the remaining sides on the container.

The container is subjected to inflation and deflation for a number of cycles until one of the films cracks at one of the heat seals, which is detected by the inability to inflate the container. The inflation is carried out by injection of air into the container sufficient to support a 6 in. (15.2 cm) column of water. The deflation is carried out by permitting the air to escape.

This inflation/deflation cycle testing is repeated on different containers made the same way from matched 5.5 mil (0.14 mm) thick films of the following: FEP 1a and G7 FEP. The films from FEP 1 and G7 FEP exhibit the same anisotropic shrinkage as the film of composition 1. The container of film composition 1 withstands 4 times the inflation/deflation cycles (ca 15,000 cycles) as the container made from the FEP 1 film and 2.4x the cycles as the container made from G7 FEP film before cracking at the heat seal boundary occurs. Thus, the film of composition 1 exhibits a hinge durability that is 400% greater than the film of the FEP (by itself) in the film composition. The hinge durability of the film of composition 1 is 240% greater than for the film of the low MFR G7 copolymer and has the further advantage higher MFR (13.6 g/10 min as compared to 7 g/10 min for G7), which provides for easier melt processing and thus increased productivity.

This experiment is repeated except that the oriented films of the same 5.5 mil (0.14 mm) thickness and anisotropy are of two different FEP compositions, as follows: (a) copolymer of 11.5 wt% HFP and 88.5 wt% TFE, having an MFR of 7 g/10 min and elongation of 369%, and (b) copolymer of 7 wt% HFP, 2.17 wt% PPVE, and 90.83 wt% TFE, having an MFR of 7 g/10 min and elongation of 345%. Cracking occurs at the heat seal boundary of the container of oriented film of copolymer (b) after fewer cycles than for the G7 film container. The container of oriented film of copolymer (a) withstands even fewer cycles before cracking than the container of film of copolymer (b).

The oriented films of the present invention exhibit a hinge durability that is at least 100% greater than for films of the same thickness and orientation of the tetrafluoroethylene/hexafluoropropylene/perfluoro(alkyl vinyl ether) copolymer by itself.

### Example 2 - Thermoforming

Oriented films of compositions 1 and 2 are extruded to make 1 mil (0.025 mm) and 2 mil (0.051 mm) thick films having the shrinkage (Shrinkage Test) indicated above for these films. Each film is treated by corona discharge on one side.

In each thermoforming process, a sheet of thermally curable butyl rubber is placed on top of the oriented film of composition 1 or 2, with the corona discharge treated side facing the butyl rubber sheet. This placement occurs in a mold such as depicted in Fig. 6 to form a stopper similar in shape to the stopper 30 of Figs 3-5. The upper and lower molds are each heated to 190°C. When the sheet/film assemblage reaches this temperature, the mold is closed to form the stopper. The dwell time is 2 min, resulting in the curing of the butyl rubber. The draw ratio (c/a) to which the film is exposed in forming the liner on the molded butyl rubber core is 4.6, as determined by measurements of "a" and "b" (Fig. 8) on the bottom portion of the stopper. The thinnest region of the film liner is in the region 41 (Fig. 8).
(a) For each of the stoppers, whether of the film composition 1 or film composition 2 forming the liner shown in Fig. 7, the liner is not ruptured. This experiment is repeated many times on the film of original thickness of 2 mils (0.051 mm), and the same result is obtained. This result is also obtained when the films of compositions 1 and 2 are 1 mil (0.025 mm) in original thickness.
(b) When the 2 mil (0.051 mm) thick film is replaced by a film of FEP 1 or FEP 2 by itself, made by the same extrusion conditions as film composition 1, the liner is ruptured during the thermoforming. The same result is obtained when the FEP is the G7 FEP composition but has an MFR of 10 g/10 min.
(c) This experiment is repeated on oriented film of 2 mil (0.051 mm) thickness, but with simultaneous molding/thermoforming of 50+ stoppers, and the success of the process is characterized by the % of stoppers exhibiting a ruptured lining. The stoppers having a lining of the film of composition 1 exhibits a failure rate (ruptured linings) of less than 2 stoppers/10,000 stoppers. When the film is of FEP 1 by itself, the failure rate is 180 stoppers/10000 stoppers. The failure rate when the film is G7 FEP by itself is improved, but the film composition 1 still provides a 40% improvement in failure rate (fewer failures) over the G7 film. Addition of the PFA to G7 FEP to form a blend of 90 wt% G7 FEP and 10 wt% PFA provides a composition that extrudes to form oriented film of the same 2 mil (0.051 mm) thickness that in repetition of the experiment of this paragraph exhibits an improved (lower) failure rate, similar to that of the oriented film of film composition 1.
(d) When simultaneous molding/thermoforming under (c) above is repeated but with film of composition 2, the failure rate is 3 stoppers/per 10,000 stoppers. When the film is FEP 2 by itself, the failure rate is even greater than when the film is FEP 1 by itself. When the film is of copolymer (b) under Example 1, the failure rate increases to more than 5 times that of the film of composition 2.
(e) To demonstrate the influence of film thickness, when the film of copolymer (b) is extruded into 3 mil (0.076 mm) thick film the failure rate in the simultaneous molding/thermoforming decreases to be about the same as that for the 2 mil (0.051 mm) thick film of film composition 2.
(f) To demonstrate the effect of stopper designs and thus draw ratio or film thickness required, a 1 mil (0.025 mm) thick film of composition 2 results in a 8.5% failure rate as compared to a 0.01 % failure rate when the original film thickness is 2 mils (0.051 mm). When the stopper design has a lower draw ratio the failure rate for the 1 mil thick film is 0.23%. When these simultaneous molding/thermoformings are repeated with film of FEP 2 by itself, the failure rate is much higher than for the film composition 2 at each film thickness. When repeated with the 2 mils (0.051mm) thick film of lower MFR copolymer (b) by itself exhibits a failure rate that is 60 times greater than for the 2 mil (0.051mm) thick film of film composition 2.

In each of the above experiments, the oriented film of the present invention exhibits at least a 25% improvement in one or more criteria of thermoforming performance, whether determined by comparing performance (i) by film thickness, (ii) with the FEP component by itself, (iii) with an FEP by itself that has lower MFR than the comparison film composition of the present invention or (iv) by failure rate. Each of these criteria of improved performance is a manifestation of the improved thermodrawability or improved draw ratio of the oriented film of the present invention in the thermoforming process.

## Claims

1. Oriented film comprising the composition 55 to 95 wt% tetrafluoroethylene/hexafluoropropylene/perfluoro(alkyl vinyl ether) copolymer and 45 to 5 wt% tetrafluoroethylene/perfluoro(alkyl vinyl ether) copolymer to total 100 wt% based on the combined weight thereof, wherein said alkyl in each said copolymer comprises 1 to 4 carbon atoms, and wherein hexafluoropropylene is not present in the tetrafluoroethylene/perfluoro(alkyl vinyl ether) copolymer.

2. The oriented film of claim 1 wherein the presence of said tetrafluoroethylene/perfluoro(alkyl vinyl ether) copolymer and said perfluoro(alkyl vinyl ether) in both said copolymers in said composition improves the thermoformability of said film.

3. The oriented film of claim 2 wherein the total amount of said perfluoro(alkyl vinyl ether) in both said copolymers of said composition is effective is to improve said thermoformability of said film.

4. The oriented film of claim 2 wherein said film exhibits an improved thermoformability of at least 25%.

5. The oriented film of claim 1 wherein the thickness of said film is no greater than 6 mils (0.015 mm).

6. The oriented film of claim 4 wherein said thickness of said film is no greater than 3 mils (0.076 mm).

7. The oriented film of claim 1 wherein the orientation of said film is anisotropic.

8. The oriented film of claim 6 wherein the orientation of said film is **characterized by** shrinkage at 200°C of at least 0.1%.

9. The oriented film of claim 1 wherein said composition has a melt flow rate (MFR) of at least 10 g/10 min.

10. The oriented film of claim 1 wherein the total amount of said perfluoro(alkyl vinyl ether) in both said copolymers of said composition is at least 2.4 wt% based on the combined weight of said copolymers.

11. The oriented film of claim 1 wherein said perfluoro(alkyl vinyl ether) of said tetrafluoroethylene/perfluoro(alkyl vinyl ether) copolymer is at least 5 wt% of said copolymer.

12. The composition of claim 1 wherein perfluoro(alkyl vinyl ether) in said tetrafluoroethylene/hexafluoropropylene/perfluoro(alkyl vinyl ether) copolymer and said tetrafluoroethylene/perfluoro(alkyl vinyl ether) copolymer is the same.

13. The composition of claim 1 wherein said composition is the product of melt blending said 55 to 95 wt% tetrafluoroethylene/hexafluoropropylene/perfluoro(alkyl vinyl ether) copolymer and said 45 to 5 wt% tetrafluoroethylene/perfluoro(alkyl vinyl ether) copolymer to total 100 wt% based on the combined weight thereof.

14. A process comprising thermoforming the oriented film of claim 1.

## Patentansprüche

1. Orientierte Folie umfassend die Zusammensetzung von Tetrafluorethylen/Hexafluorpropylen/Perfluor(alkylvinylether)-Copolymer von 55 bis 95 Gew.-% und Tetrafluorethylen/Perfluor(alkylvinylether)-Copolymer von 45 bis 5 Gew.-%, insgesamt 100 Gew.-% betragend, auf das kombinierte Gewicht davon bezogen, wobei das Alkyl in jedem Copolymer 1 bis 4 Kohlenstoffatomen umfasst und wobei Hexafluorpropylen in dem Tetrafluorethylen/Perfluor(alkylvinylether)-Copolymer nicht vorliegt.

2. Orientierte Folie nach Anspruch 1, wobei das Vorliegen des Tetrafluorethylen/Perfluor(alkylvinylether)-Copolymers und des Perfluor(alkylvinylethers) in beiden Copolymeren in der Zusammensetzung die Thermoformfähigkeit der Folie verbessert.

3. Orientierte Folie nach Anspruch 2, wobei die Gesamtmenge des Perfluor(alkylvinylethers) in beiden Copolymeren der Zusammensetzung bewirkt, dass sich die Thermofähigkeit der Folie verbessert.

4. Orientierte Folie nach Anspruch 2, wobei die Folie eine verbesserte Thermoformfähigkeit von mindestens 25 % aufweist.

5. Orientierte Folie nach Anspruch 1, wobei die Dicke der Folie nicht mehr als 6 mil (0,015 mm) beträgt.

6. Orientierte Folie nach Anspruch 4, wobei die Dicke der Folie nicht mehr als 3 mil (0,076 mm) beträgt.

7. Orientierte Folie nach Anspruch 1, wobei die Orientierung der Folie anisotrop ist.

8. Orientierte Folie nach Anspruch 6, wobei die Orientierung der Folie durch Schrumpfung bei 200 °C von mindestens 0,1 % gekennzeichnet ist.

9. Orientierte Folie nach Anspruch 1, wobei die Zusammensetzung eine Schmelzfließrate (MFR) von mindestens 10 g/10 min aufweist.

10. Orientierte Folie nach Anspruch 1, wobei die Gesamtmenge des Perfluor(alkylvinylethers) in beiden Copolymeren der Zusammensetzung mindestens 2,4 Gew.-%, auf das kombinierte Gewicht der Copolymeren bezogen, beträgt.

11. Orientierte Folie nach Anspruch 1, wobei der Perfluor(alkylvinylether) des Tetrafluorethylen-Perfluor(alkylvinylether)-Copolymers mindestens 5 Gew.-% des Copolymers beträgt.

12. Zusammensetzung nach Anspruch 1, wobei der Perfluor(alkylvinylether) in dem Tetrafluorethylen/Hexafluorpropylen/Perfluor(alkylvinylether)-Copolymer und dem Tetrafluorethylen/Perfluor(alkylvinylether)-Copolymer derselbe ist.

13. Zusammensetzung nach Anspruch 1, wobei die Zusammensetzung das Produkt von Schmelzmischen des Tetrafluorethylen/Hexafluorpropylen/Perfluor(alkylvinylether)-Copolymers von 55 bis 95 Gew.-% und des Tetrafluorethylen/Perfluor(alkylvinylether)-Copolymers von 45 bis 5 Gew.-%, insgesamt 100 Gew.-% betragend, auf das kombinierte Gewicht davon bezogen, ist.

14. Verfahren umfassend das Thermoformen der orientierten Folie nach Anspruch 1.

## Revendications

1. Film orienté comprenant la composition de 55 à 95 % en pds de copolymère de tétrafluoroéthylène/hexafluoropropylène/perfluoro(éther d'alkyl vinyle) et de 45 à 5 % en pds de copolymère de tétrafluoroéthylène/perfluoro(éther d'alkyl vinyle), en tout 100 % en pds sur la base de leur poids combiné, ledit alkyle dans chacun dudit copolymère comprenant de 1 à 4 atomes de carbone, et l'hexafluoropropylène n'étant pas présent dans le copolymère de tétrafluoroéthylène/perfluoro(éther d'alkyl vinyle).

2. Film orienté selon la revendication 1, la présence dudit copolymère de tétrafluoroéthylène/perfluoro(éther d'alkyl vinyle) et dudit perfluoro(éther d'alkyl vinyle) dans lesdits deux copolymères dans ladite composition améliorant la capacité de thermoformage dudit film.

3. Film orienté selon la revendication 2, la quantité totale dudit perfluoro(éther d'alkyl vinyle) dans lesdits deux copolymères de ladite composition étant efficace pour améliorer ladite capacité de thermoformage dudit film.

4. Film orienté selon la revendication 2, ledit film faisant preuve d'une capacité de thermoformage améliorée d'au moins 25 %.

5. Film orienté selon la revendication 1, l'épaisseur dudit film n'étant pas supérieure à 6 mils (0,015 mm).

6. Film orienté selon la revendication 4, ladite épaisseur dudit film n'étant pas supérieure à 3 mils (0,076 mm).

7. Film orienté selon la revendication 1, l'orientation dudit film étant anisotrope.

8. Film orienté selon la revendication 6, l'orientation dudit film étant **caractérisée par** le rétrécissement à 200°C d'au moins 0,1 %.

9. Film orienté selon la revendication 1, ladite composition ayant un débit d'écoulement à l'état fondu (MFR) d'au moins 10 g/10 min.

10. Film orienté selon la revendication 1, la quantité totale dudit perfluoro(éther d'alkyl vinyle) dans lesdits deux copolymères de ladite composition étant d'au moins 2,4 % en pds sur la base du poids combiné desdits copolymères.

11. Film orienté selon la revendication 1, ledit perfluoro(éther d'alkyl vinyle) dudit copolymère de tétrafluoroéthylène/perfluoro(éther d'alkyl vinyle) étant d'au moins 5 % en pds dudit copolymère.

12. Composition selon la revendication 1, ledit perfluoro(éther d'alkyl vinyle) dans ledit copolymère de tétrafluoroéthylène/hexafluoropropylène/perfluoro(éther d'alkyl vinyle) et ledit copolymère de tétrafluoroéthylène/perfluoro(éther d'alkyl vinyle) étant identique.

13. Composition selon la revendication 1, ladite composition étant le produit du mélange à l'état fondu desdits 55 à 95 % en pds de copolymère de tétrafluoroéthylène/hexafluoropropylène/perfluoro(éther d'alkyl vinyle) et desdits 45 à 5 % en pds de copolymère de tétrafluoroéthylène/perfluoro(éther d'alkyl vinyle), en tout 100 % en pds sur la base de leur poids combiné.

14. Procédé comprenant le thermoformage du film orienté selon la revendication 1.
